Europäisches Patentamt

European Patent Office

Office européen des brevets

(19)

(11) Numéro de publication: **0 291 614 B1**

(12) **FASCICULE DE BREVET EUROPEEN**

(45) Date de publication du fascicule du brevet:
23.11.89

(51) Int. Cl.⁴: **E05B 19/00**, B65G 1/08

(21) Numéro de dépôt: 87420141.1

(22) Date de dépôt: 22.05.87

(54) Système de stockage et d'inventaire de clés.

(43) Date de publication de la demande:
23.11.88 Bulletin 88/47

(45) Mention de la délivrance du brevet:
23.11.89 Bulletin 89/47

(84) Etats contractants désignés:
AT BE CH DE ES FR GB GR IT LI LU NL SE

(56) Documents cités:
EP-A- 0 104 072

(73) Titulaire: KEY-MATIC INDUSTRIES Inc., P.O. Box 2021,
Petersburg Virginia 23804(US)

(72) Inventeur: Welch, James A., 4865 Capital Circle S.W.,
Tallahassee Florida 32305(US)

(74) Mandataire: Dupuis, François, Cabinet Charras 3 Place
de l'Hôtel-de-Ville BP 203, F-42005 St. Etienne
Cédex 1(FR)

ACTORUM AG

## Description

L'invention concerne un système de stockage et d'inventaire de clés, caractérisé en ce que chaque clé est munie d'un réceptacle incliné dans lequel la clé est stockée pour utilisation future. Un microprocesseur contrôle la délivrance des clés et enregistre le nom de la personne qui a utilisé la clé, en indiquant dans quel but et pour quelle durée.

Chez les concessionnaires automobiles et dans les agences de location de voitures, il est nécessaire de conserver la trace d'un grand nombre de clés de voitures. Les clés sont utilisées par les vendeurs qui font la démonstration des voitures, par les acheteurs potentiels essayant les voitures, et par le personnel assurant l'entretien et le déplacement des véhicules. D'une manière typique, les concessionnaires de voitures et les agences de location utilisent un panneau à crochets sur lequel sont placées les différentes clés pour toutes les voitures ensemble. Chaque jeu de clés de véhicule est affecté à un seul crochet. Une personne qui a besoin d'une clé se sert tout simplement sur le panneau.

Comme on pourra l'apprécier, un tel système entraîne parfois l'utilisation de véhicules sans autorisation. De plus, il est difficile de déterminer si une voiture se trouve dans l'atelier pour un entretien de routine ou est utilisée par un vendeur ou un acheteur potentiel.

On connaît bien, dans la technique, des systèmes automatisés d'entreposage servant à stocker et à manutentionner des articles individuels, voir brevets américains 3 157 296 ; 3 297 379 ; 3 920 195 ; 3 968 888 et 4 239 436. De tels systèmes peuvent être équipés d'un moyen de contrôle par ordinateur pour enregistrer l'inventaire des articles.

Des systèmes automatiques de stockage et de manutention des articles ont été proposés, équipés de casiers inclinés dans lesquels on stocke une pluralité d'articles similaires, voir brevet américain 3 520 424. Dans un système similaire, des cassettes de rubans individuelles sont stockées dans des compartiments individuels inclinés, caractérisés en ce que les cassettes sont maintenues en place par des butées. Un tel système de stockage et de manutention de cassettes est dévoilé dans le brevet américain 4 251 177.

Des systèmes de manutention automatique de colis ont également été proposés pour des applications de sécurité, voir brevets américains 3 964 577 et 4 225 278. D'une manière générale, un utilisateur est équipé d'un récipient dans lequel il place les articles à stocker. Le récipient est ensuite ramené automatiquement dans une zone de sécurité et est indexé comme il convient.

Des cartes codées avec les données peuvent être stockées dans une matrice rectangulaire de compartiments de stockage adressables, comme cela est proposé dans les brevets américains 3 473 675 et 3 536 194. Un clavier électronique peut être utilisé pour adresser les compartiments individuels et sélectionner les cartes de données pour une machine de traitement de l'information.

Un objet de la présente invention est de fournir un système de contrôle automatique du stockage et de l'inventaire pour des clés, et particulièrement des clés de voitures. Le système dévoilé utilise un microprocesseur pour enregistrer l'utilisation de chaque clé, en enregistrant le nom de la personne qui a utilisé la clé, et dans quel but. Ainsi, un directeur peut surveiller l'utilisation des clés et les activités de son personnel. Un autre objet de la présente invention est de fournir une unité sûre de stockage des clés, dans laquelle l'accès peut être seulement obtenu en entrant le code d'employé propre. Les clés sont stockées dans une enceinte sûre, ayant une pluralité de récipients individuels dans lesquels une clé individuelle est stockée. En entrant le code approprié, la clé est libérée et déposée sur un plateau de réception où elle peut être prise par un utilisateur.

Un autre objet de la présente invention est de fournir un système de manutention des clés entièrement automatique. On dépose une clé dans la machine, on code un numéro de clé, après quoi la clé est automatiquement dirigée vers un récipient spécifique au moyen d'un ensemble de manutention automatique.

L'ensemble de contrôle de stockage et d'inventaire selon la présente invention comporte une matrice rectangulaire de récipients de stockage inclinés, dans lesquels les clés individuelles sont stockées. Chaque récipient de stockage est muni d'un portillon d'ouverture qui est maintenu normalement fermé par un moyen de verrouillage comportant des aimants permanents.

Un moyen de positionnement positionne une clé déposée dans la machine dans le récipient de stockage approprié. Le moyen de positionnement comporte deux vis orthogonales se rejoignant au moyen d'un premier ensemble d'écrou en forme de croix sur lequel est monté un récipient récepteur incliné comportant un portillon. Lorsqu'on fait tourner les vis, le récipient récepteur est positionné sur la colonne verticale et sur la rangée horizontale correctes. Lorsque le récipient récepteur est positionné à côté du récipient de stockage correct, le portillon du récipient récepteur s'ouvre, ce qui permet à la clé de glisser dans le récipient de stockage correct. En disposant les récipients avec une inclinaison, on permet aux clés de descendre en cascade du récipient récepteur au récipient de stockage.

La machine est également munie d'un moyen permettant d'enlever une clé d'un récipient de stockage. Ce moyen d'enlèvement comporte deux vis orthogonales réunies au moyen d'un deuxième ensemble d'écrou en forme de croix. Un élément d'ouverture comportant un électroaimant est monté sur l'ensemble d'écrou et est utilisé pour ouvrir magnétiquement le récipient choisi. Les vis sont chacune accouplées à un moteur électrique et sont utilisées pour positionner l'ensemble d'écrou en forme de croix et l'élément d'ouverture situé à côté du récipient de stockage correct. Lorsqu'on ouvre le récipient de stockage, une clé sort et est déposée sur un plateau récepteur où elle peut être prise par l'utilisateur.

Le fonctionnement du moyen de positionnement et celui du moyen d'enlèvement sont contrôlés par un microprocesseur. Le microprocesseur est prévu avec des instructions de fonctionnement et des sous-programmes pour contrôler le mouvement des moteurs électriques faisant tourner les vis de façon que les éléments associés soient correctement positionnés. De plus, le microprocesseur recueille les données d'utilisation pour surveiller l'utilisation et les utilisateurs des clés.

La présente invention est maintenant décrite par référence aux dessins annexés dans lesquels :

La figure 1 est une vue en perspective de la machine ;
La figure 2 est une vue latérale du mécanisme interne de la machine ;

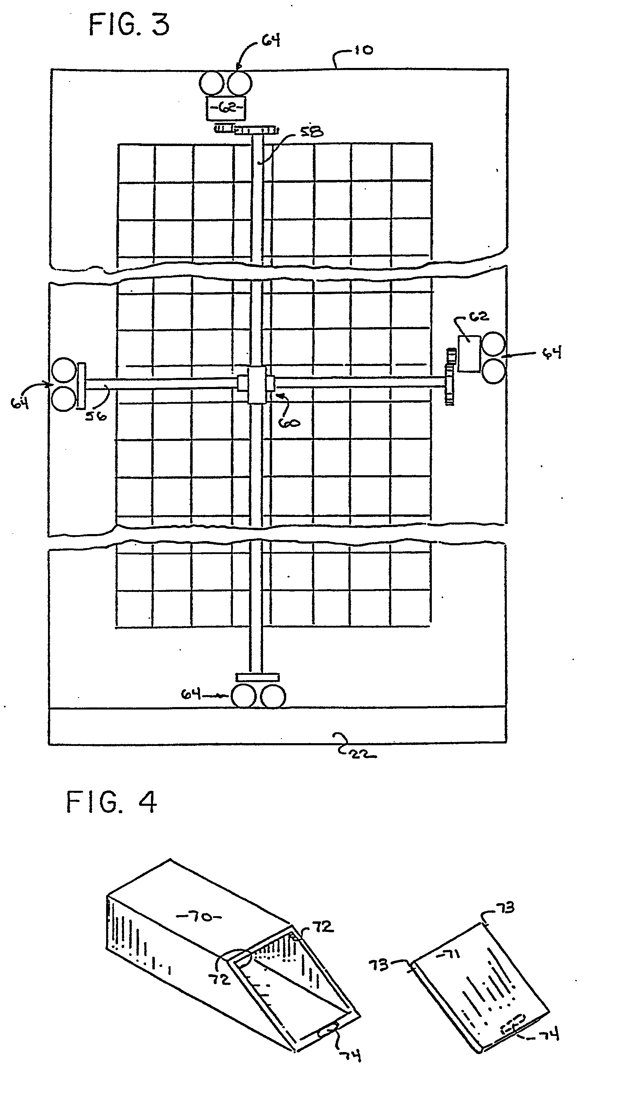

La figure 3 est une vue de face des mécanismes internes de la machine ;
La figure 4 est une vue éclatée en perspective d'un des récipients et du portillon d'ouverture associé ; et

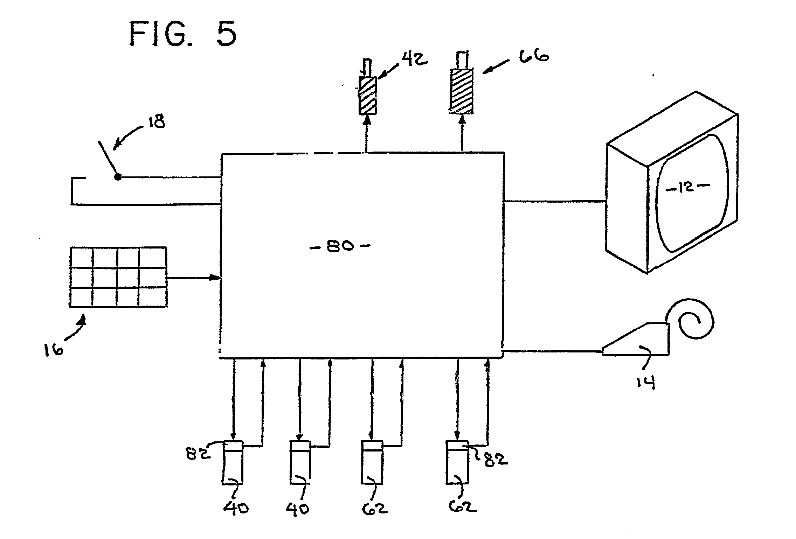

La figure 5 est une vue schématique du fonctionnement de la machine.

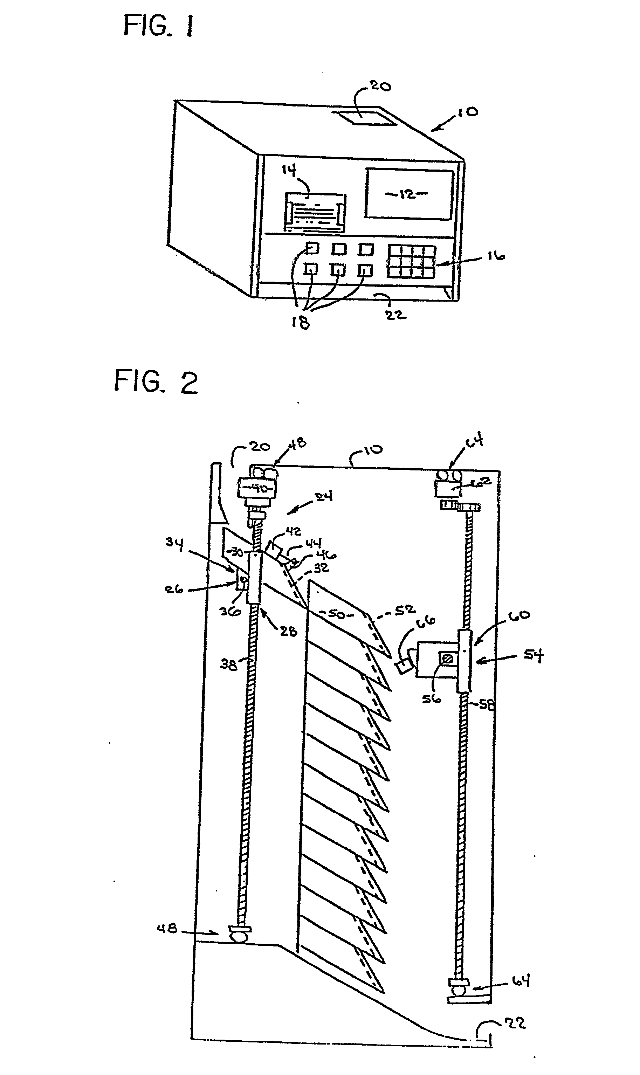

La figure 1 est une vue en perspective du système selon la présente invention, comprenant une enceinte 10 comprenant un tube à rayon cathodique de visualisation 12 et une imprimante 14. Le panneau avant est également muni d'un clavier 16 et d'une pluralité d'interrupteurs 18. Le dessus de l'enceinte est muni d'une ouverture 20 dans laquelle est déposée une clé retournée. A la base de l'enceinte se trouve un plateau récepteur 22 dans lequel une clé est libérée du système de stockage pour être prise par l'utilisateur.

L'intérieur de l'enceinte est muni d'un moyen de positionnement 24 comprenant un dispositif de sélection sur colonne verticale 26 et un dispositif de sélection sur rangée horizontale 28. Comme cela est illustré à la figure 2, une clé que l'on a laissée tomber par l'ouverture 20 est déposée sur un récipient récepteur incliné 30 comportant un portillon d'ouverture 32. Le récipient récepteur est monté sur un premier ensemble d'écrou 34 en forme de croix monté opérationnellement sur une vis horizontale 36 et sur une vis verticale 38. Les deux vis passent à travers l'enceinte et sont animées sélectivement d'un mouvement de rotation par des moteurs électriques. Le moteur électrique 40 est utilisé pour faire tourner la vis verticale 38. Les deux extrémités de chaque vis sont montées sur un ensemble coulissant 48 pour permettre le libre mouvement des vis. Par conséquent, le dispositif de sélection de colonne 26 est composé d'une vis commandée par moteur 36, et d'un dispositif de sélection de rangée 28 composé d'une vis commandée par moteur 40.

Un seul récipient récepteur incliné est monté sur le premier ensemble d'écrou en forme de croix 34. De cette façon, le récipient récepteur peut se déplacer sur toute la largeur et sur toute la hauteur de l'intérieur de l'enceinte. Après avoir atteint la colonne verticale et la rangée horizontale correctes, le portillon 32 est ouvert par le solénoïde 42 muni d'une tige 44 accouplée à la partie verticale 46 du portillon 32. L'ouverture du portillon 32 permet à la clé retenue à l'intérieur du récipient récepteur de sortir du récipient pour glisser dans le récipient de stockage 50. Il y a lieu de noter que le récipient récepteur 30 comporte une partie supérieure ouverte à côté de l'ouverture 20, de sorte qu'une clé peut tomber librement dans le récipient récepteur. Le solénoïde 42 est monté sur une barre transversale située sur le dessus du récipient, isolée de l'ouverture 20.

Une pluralité de récipients de stockage inclinés 50 sont disposés dans une matrice rectangulaire à l'intérieur de l'enceinte et sont utilisés pour le stockage de clés individuelles dans des récipients individuels. Comme c'est le cas pour les récipients récepteurs, chaque récipient de stockage est muni d'un portillon d'ouverture 52.

Pour enlever une clé d'un récipient de stockage, il faut agir sur le moyen d'enlèvement 54. Le moyen d'enlèvement 54 est très similaire au moyen de positionnement et comporte une vis horizontale 56, une vis verticale 58, et un ensemble d'écrou en forme de croix 60. Chaque vis est munie d'un moteur électrique 62 pouvant faire tourner sélectivement chaque vis. Les extrémités de chaque vis sont montées sur des ensembles coulissants 64, de sorte que les vis peuvent tourner librement en réponse au mouvement de l'autre vis. Les ensembles coulissants peuvent comporter des roulements à billes ou à rouleaux sur un ensemble de rails. L'élément d'ouverture 66 comportant un électroaimant est fixé sur l'ensemble d'écrou en forme de croix et est utilisé pour ouvrir le portillon du récipient de stockage. Lorsque l'électroaimant est excité, le portillon d'ouverture pivote vers le haut, ce qui a pour effet de libérer la clé du récipient de stockage incliné.

La structure générale du récipient récepteur et celle des récipients de stockage sont identiques et comportent un boîtier rectangulaire 70 ayant une ouverture à chaque extrémité. L'extrémité inférieure du récipient incliné est munie d'un portillon d'ouverture 71 comportant des axes 73 pivotant sur le boîtier en 72. Le portillon d'ouverture et le boîtier sont tous les deux munis d'aimants permanents 74 agissant comme moyens de verrouillage pour maintenir le portillon fermé dans des conditions de fonctionnement normales.

Comme cela a été noté plus haut, le récipient récepteur est muni d'un dessus ouvert pour permettre à une clé de tomber dans le récipient par l'ouverture 20. De plus, le portillon d'ouverture du récipient récepteur est muni d'une partie verticale agissant comme un bras de transmission de couple pour l'ouverture du portillon. Le solénoïde utilisé pour l'ouverture du portillon est plus fort que le moyen de verrouillage à aimant permanent.

Le moyen de positionnement et le moyen d'enlèvement sont contrôlés par un dispositif comprenant un microprocesseur 80. Le microprocesseur est couplé électriquement aux moteurs électriques 40 et 62, qui font tourner les vis et positionnent sélectivement les ensembles d'écrous et, par conséquent, le récipient récepteur du moyen de positionnement et l'élément d'ouverture du moyen d'enlèvement. Chaque moteur est muni d'un codeur 82 couplé au microprocesseur pour détecter la position de rotation du moteur.

Le microprocesseur a des instructions de fonctionnement en mémoire et des sous-programmes qui contrôlent le fonctionnement du moyen de positionnement et du moyen d'enlèvement. Ces instructions de fonctionnement et ces sous-programmes identifient essentiellement chaque emplacement de clé par un numéro de clé et un numéro d'emplacement du récipient de stockage. Toutefois, lorsqu'une clé est déposée dans la machine, l'utilisateur code par le clavier le numéro de clé dans le microprocesseur. Le microprocesseur envoie des directives aux moteurs électriques du moyen de positionnement pour déplacer la clé à travers les récipients récepteurs jusqu'à ce qu'elle soit positionnée dans le récipient de stockage correct. Si on désire une clé du stockage, l'utilisateur code le numéro de clé approprié dans le microprocesseur par l'intermédiaire du clavier et le microprocesseur envoie des directives au moyen d'enlèvement pour qu'il ouvre le récipient de stockage correct.

En plus des instructions de fonctionnement et des sous-programmes, le microprocesseur stocke les données d'utilisation concernant chaque clé, chaque utilisateur et chaque utilisation. Plus spécifiquement, lorsqu'une clé doit être enlevée ou restituée, l'utilisateur, en plus du codage du numéro de clé, doit également coder par le clavier un code d'utilisateur identifiant l'utilisateur. De cette façon, la machine peut prévenir l'utilisation des clés sans autorisation par une personne non qualifiée, par un numéro de code, et également surveiller l'utilisation des clés par l'utilisateur.

Le microprocesseur est équipé d'une horloge extérieure ou intérieure utilisée pour calculer la durée d'utilisation des clés. Principalement, le temps pendant lequel la clé a été utilisée est enregistré avec les heures effectives d'utilisation. Par conséquent, l'archivage des données d'utilisation d'une clé comprend un numéro d'identification de l'employé, un numéro de clé, le temps d'utilisation et les heures effectives d'utilisation. Les heures effectives d'utilisation sont importantes car on peut les utiliser pour déterminer si les employés ont utilisé des véhicules en dehors des heures de travail.

Un code d'utilisation est également prévu en appuyant sur une touche appropriée 18 située sur le devant de l'enceinte. Par exemple, une touche peut indiquer une utilisation en démonstration et une autre en entretien. Ceci peut servir de contrôle supplémentaire car un utilisateur déterminé peut désigner une seule utilisation, par exemple un vendeur peut seulement désigner l'utilisation pour une démonstration, ou le personnel d'entretien peut seulement désigner l'entretien.

En restituant les clés, l'utilisateur code le numero de clé et le numéro d'utilisateur. Le microprocesseur compare alors les données pour déterminer si la clé identifiée correspond bien à l'employé identifié. Si la clé et l'employé correspondent, le microprocesseur restitue la clé au stockage. Si la clé et l'utilisateur ne correspondent pas, une instruction apparaît sur le tube à rayon cathodique d'affichage 12 demandant à l'utilisateur de recoder le numéro de clé et le numéro d'employé.

Pour faciliter l'utilisation de la machine en tant qu'outil de gestion, la machine est munie d'un tube à rayons cathodiques d'affichage et d'une imprimante. En appuyant sur la touche appropriée 18, on appelle un sous-programme du microprocesseur qui demande l'état de toutes les clés et affiche les résultats sur l'écran. Si des archives permanentes doivent être tenues, on peut appuyer sur une autre touche 18 qui agit sur l'imprimante.

**Revendications**

1. Ensemble de contrôle de stockage et d'inventaire pour une pluralité de clés individuelles, ayant chacune un but distinct, ledit ensemble comprenant :
- une pluralité de récipients de stockage inclinés, chaque récipient étant adapté et conçu de façon à contenir au moins une clé individuelle, chaque récipient étant muni d'un portillon pouvant s'ouvrir, contenant une clé dans le récipient lorsque le portillon est fermé et délivrant une clé du récipient lorsque le portillon s'ouvre ;
  - un moyen de positionnement pour recevoir les clés individuelles et pour placer une clé dans un récipient de stockage sélectionné ;
  - un moyen d'enlèvement d'une clé individuelle de l'un des récipients de stockage, le moyen d'enlèvement comportant un élément d'ouverture du portillon et libérant la clé du récipient de stockage sélectionné ;
  caractérisé en ce qu'un moyen de contrôle surveille le fonctionnement du moyen de dépose et du moyen d'enlèvement, le moyen de contrôle donnant des instructions au moyen de positionnement pour déposer une clé dans un récipient de stockage sélectionné, et donnant également des directives au moyen d'enlèvement pour retirer une clé d'un récipient de stockage sélectionné.

2. Ensemble tel que défini par la revendication 1, caractérisé en ce que la pluralité des récipients de stockage inclinés sont disposés dans une matrice rectangulaire.

3. Ensemble tel que défini par la revendication 2, caractérisé en ce que le moyen de positionnement comprend un dispositif de sélection à colonne verticale pour le positionnement correct d'une clé individuelle dans une colonne appropriée de la matrice rectangulaire.

4. Ensemble tel que défini par la revendication 3, caractérisé en ce que le moyen de positionnement est également muni d'un dispositif de sélection à rangée horizontale pour le positionnement correct d'une clé individuelle dans une rangée horizontale appropriée de la matrice rectangulaire.

5. Ensemble tel que défini par la revendication 4, caractérisé en ce que le moyen de positionnement comprend en outre un récipient récepteur incliné couplé en fonctionnement avec une vis horizontale par un premier ensemble d'écrou en forme de croix, la vis étant couplée en fonctionnement avec un moteur faisant tourner la vis, en positionnant horizontalement le récipient récepteur.

6. Ensemble tel que défini par la revendication 5, caractérisé en ce que le dispositif de sélection à rangée horizontale comprend une vis verticale couplée en fonctionnement avec le premier ensemble d'écrou en forme de croix, la vis verticale étant couplée avec un moteur faisant tourner la vis, en positionnant verticalement le récipient récepteur.

7. Ensemble tel que défini par la revendication 6, caractérisé en ce que l'élément d'ouverture du moyen d'enlèvement est positionné sélectivement à l'opposé du portillon d'ouverture d'un récipient de stockage sélectionné.

8. Ensemble tel que défini par la revendication 7, caractérisé en ce que le moyen d'enlèvement comporte une deuxième vis verticale et une deuxième vis horizontale, les deux vis étant couplées en fonctionnement avec un deuxième ensemble d'écrou en forme de croix sur lequel est monté l'élément d'ouverture, chaque vis étant munie d'un moteur faisant tourner chaque vis pour positionner sélectivement l'ensemble d'écrou en forme de croix et un élément d'ouverture situé à côté du portillon d'ouverture d'un récipient de stockage sélectionné.

9. Ensemble tel que défini par la revendication 8, caractérisé en ce que l'élément d'ouverture est un électroaimant ouvrant magnétiquement le portillon d'un récipient de stockage sélectionné lorsque l'électroaimant est excité.

10. Ensemble tel que défini par la revendication 9, caractérisé en ce que les portillons d'ouverture des récipients de stockage sont fixés sur les récipients de stockage sur lesquels ils pivotent, chaque portillon d'ouverture étant muni d'un moyen de verrouillage pour maintenir chaque récipient de stockage dans une position normalement fermée.

11. Ensemble tel que défini par la revendication 10, caractérisé en ce que le premier récipient récepteur est muni d'un portillon d'ouverture ayant un moyen de verrouillage pour maintenir le récipient récepteur dans une position normalement fermée.

12. Ensemble tel que défini par la revendication 11, caractérisé en ce que le moyen de verrouillage des récipients de stockage et les récipients de stockage eux-mêmes comportent des aimants permanents.

13. Ensemble tel que défini par la revendication 12, caractérisé en ce que le moyen de commande est un microprocesseur couplé électriquement avec le moyen de positionnement et avec le moyen d'enlèvement, le microprocesseur étant muni d'un moyen de stockage des instructions opérationnelles et des sous-programmes, ainsi que des données d'usage pour l'utilisation des clés individuelles.

14. Ensemble tel que défini par la revendication 13, caractérisé en ce que le moyen de commande est muni d'un moyen d'entrée comprenant un clavier pour le codage des informations dans le microprocesseur concernant une clé individuelle.

15. Ensemble tel que défini par la revendication 14, caractérisé en ce que le moyen de commande est muni d'un tube à rayons cathodiques pour afficher les données d'usage stockées dans le microprocesseur.

16. Ensemble tel que défini par la revendication 15, caractérisé en ce que le moyen de commande est muni d'une imprimante pour l'impression des données d'usage stockées dans le microprocesseur.

17. Ensemble tel que défini par la revendication 16, caractérisé en ce que le moyen de commande est muni d'une pluralité d'interrupteurs actionnant directement des sous-programmes opérationnels spécifiques.

18. Ensemble tel que défini par la revendication 17, comprenant en outre un plateau récepteur dans lequel une clé est déposée par l'un des récipients de stockage.

19. Ensemble tel que défini par la revendication 18, caractérisé en ce que la matrice rectangulaire des récipients de stockage est logée dans une enceinte sûre.

20. Ensemble tel que défini par la revendication 12, caractérisé en ce que le récipient récepteur est muni d'un solénoïde couplé avec une partie verticale du portillon d'ouverture en vue d'ouvrir le portillon d'ouverture.

**Patentansprüche**

1. Lagerungs- und Inventar-Prüfeinheit für mehrere Einzelschlüssel wobei jeder einen unterschiedlichen Zweck hat. Die Einheit besteht aus:
- einer Vielzahl von geneigten Lagerbehältern, wobei jeder Behälter angepaßt und entwickelt worden ist, um mindestens einen Einzelschlüssel zu fassen, und jeder Behälter ist mit einer öffnenden Tür versehen, enthält einen Schlüssel in geschlossenem Zustand und liefert einen Schlüssel ab, wenn die Tür geöffnet wird.
- einem Positioniermittel für die Aufnahme von Einzelschlüsseln und um einen Schlüssel in einen gewählten Lagerbehälter abzulegen;
- einem Mittel für die Entnahme eines Einzelschlüssels aus einem Lagerbehälter, wobei das Entnahmemittel mit einem Öffnungsmittel der Tür versehen ist und befreit den Schlüssel vom gewählten Lagerbehälter.
- dadurch gekennzeichnet, daß ein Überwachungsmittel die Arbeitsweise des Ablage- und des Entnahmemittels überwacht, wobei das Überwachungsmittel Anweisungen an das Positioniermittel erteilt damit es einen Schlüssel in einen gewählten Lagerbehälter ablegt, und ebenfalls Anweisungen an das Entnahmemittel erteilt, damit es einen Schlüssel aus einem gewählten Lagerbehälter entnimmt.

2. Einheit nach Anspruch 1, dadurch gekennzeichnet, daß die Vielzahl von geneigten Lagerbehältern in einer Rechteckmatrix angeordnet sind.

3. Einheit nach Anspruch 2, dadurch gekennzeichnet, daß das Positioniermittel Auswahleinrichtung mit Vertikalspalte zum einwandfreien Positionieren eines Einzelschlüssel in einer geeigneten Spalte der Rechteckmatrix enthält.

4. Einheit nach Anspruch 3, dadurch gekennzeichnet, daß das Positionierungsmittel ebenfalls mit einer Auswahleinrichtung mit horizontaler Reihe, für die einwandfreie Positionierung eines Einzelschlüssels in einer horizontalen Reihe der Rechteckmatrix versehen ist.

5. Einheit nach Anspruch 4, dadurch gekennzeichnet daß das Positionierungsmittel außerdem einen geneigten Aufnahmebehälter enthält, der in Betrieb mit einer Horizontalspindel über eine erste kreuzförmige Muttereinheit gekuppelt ist, wobei die Vertikalspindel in Betrieb mit einem Motor gekuppelt ist, der durch die horizontale Positionierung des Aufnahmebehälters den Antrieb der Spindel bewirkt.

6. Einheit nach Anspruch 5, dadurch gekennzeichnet, daß die Auswahleinrichtung mit horizontaler Reihe eine Vertikalspindel enthält, die in Betrieb mit der ersten kreuzförmigen Muttereinheit gekuppelt ist, wobei die Vertikalspindel mit einem Motor gekuppelt ist, der durch die horizontale Positionierung des Aufnahmebehälters den Antrieb der Spindel bewirkt.

7 Einheit nach Anspruch 6, dadurch gekennzeichnet, daß das Öffnungselement des Entnahmemittels selektiv auf der gegenüberliegenden Seite der Öffnungstür eines ausgewählten Aufnahmebehälters positioniert wird.

8. Einheit nach Anspruch 7, dadurch gekennzeichnet, daß das Entnahmemittel eine zweite Vertikalspindel und eine zweite Horizontalspindel aufweist, wobei die zwei Spindeln in Betrieb mit einer zweiten kreuzförmigen Muttereinheit mit Öffnungselement gekuppelt werden. Jede Spindel ist mit einem Motor ausgestattet der jede Spindel zur selektiven Positionierung der kreuzförmigen Muttereinheit antreibt, mit einem Öffnungselement in der Nähe der Öffnungstür eines ausgewählten Lagerbehälters.

9. Einheit nach Anspruch 8, dadurch gekennzeichnet, daß das Öffnungselement ein Elektromagnet ist, zur magnetischen Öffnung der Tür eines ausgewählten Lagerbehälters bei Erregung des Elektromagnets.

10. Einheit nach Anspruch 9, dadurch gekennzeichnet, daß die Öffnungstüren der Lagerbehälter auf den Lagerbehältern schwenkbar angeordnet sind, wobei jede Tür mit einem Verriegelungsmittel versehen ist, um jeden Lagerbehälter in einer normal geschlossenen Stellung zu halten.

11. Einheit nach Anspruch 10, dadurch gekennzeichnet, daß der erste Aufnahmebehälter mit einer Öffnungstür mit Verriegelungsmittel zur Haltung des Aufnahmebehälters in einer normal geschlossenen Stellung vorgesehen ist.

12. Einheit nach Anspruch 11, dadurch gekennzeichnet, daß das Verriegelungsmittel der Lagerbehälter und die Lagerbehälter selbst mit Permanentmagneten vorgesehen sind.

13. Einheit nach Anspruch 12, dadurch gekennzeichnet, daß das Antriebsmittel ein Mikroprozessor ist, der mit dem Positionierungsmittel und dem Entnahmemittel elektrisch gekoppelt ist, wobei der Mikroprozessor mit einem Speichermittel für Betriebsanweisungen und Unterprogramme sowie mit Benutzungsdaten für die Verwendung von Einzelschlüsseln ausgerüstet ist.

14. Einheit nach Anspruch 13, dadurch gekennzeichnet, daß das Antriebsmittel mit einem Eingangsmittel bestehend aus einer Tastatur zur Kodierung der Daten im Mikroprozessor für einen Einzelschlüssel, ausgestattet ist.

15. Einheit nach Anspruch 14, dadurch gekennzeichnet, daß das Antriebsmittel mit einer Kathodenstrahlröhre zur Anzeige der im Mikroprozessor gespeicherten Benutzungsdaten augestattet ist.

16. Einheit nach Anspruch 15, dadurch gekennzeichnet, daß das Antriebsmittel mit einer Drucker für das Ausdrucken der im Mikroprozessor gespeicherten Benutzungsdaten.

17. Einheit nach Anspruch 16, dadurch gekennzeichnet, daß das Antriebsmittel mit einer Vielzahl von Schaltern, welche spezifische Betriebsunterprogramme betätigen, ausgerüstet ist.

18. Einheit nach Anspruch 17, mit zusätzlich einem Aufnahmeteller in welchem ein Schlüssel aus einem der Lagerbehälter abgelegt wird.

19. Einheit nach Anspruch 18, dadurch gekennzeichnet, daß die Rechteckmatrix der Lagerbehälter in einem sicheren Gehäuse untergebracht ist.

20. Einheit nach Anspruch 12, dadurch gekennzeichnet, daß der Aufnahmebehälter mit einem Solonoid versehen ist, das mit einem Vertikalteil der Öffnungstür zum Öffnen der Öffnungstür gekoppelt ist.

## Claims

1. Storage and inventory checking assembly for a plurality of individual keys, each having a distinct aim, the said assembly comprising:
 – a plurality of sloped storage containers, each container being adapted and designed so as to contain at least one individual key, each container being supplied with a door capable of opening, containing, a key in the container when the door is closed and delivering a key from the container when the door is opened;
 – positioning means to take the individual keys and place a key into a selected storage container;
 – means to remove an individual key from one of the storage containers, the removal means comprising a door opening component and freeing the key from the selected storage container;
 – wherein checking means monitor the operation of the placing means and the removal means, the checking means giving instructions to the positoining means in order to place a key into a selected storage container and also giving instructions to the removal means to remove a key from a selected storage container.

2. Assembly as defined in claim 1, wherein the plurality of sloped storage containers are arranged in a rectangular matrix.

3. Assembly as defined by claim 2, wherein the positioning means comprise a selection device with vertical column to correctly position an individual key into a suitable column of the rectangular matrix.

4. Assembly as definded in claim 3, wherein the positioning means is also supplied with a horizontal row selection device to correctly position an individual key into the suitable horizontal row of the rectangular matrix.

5. Assembly as defined in claim 4, wherein the positioning means comprises, in addition, a sloped receiver container coupled in operation with a horizontal screw by a first nut assembly in the shape of a cross, the screw being coupled in operation with a motor turning the screw whilst horizontally positioning the receiver container.

6. Assembly as defined in claim 5, wherein the horizontal row selection device comprises a vertical screw coupled in operation with the first nut assembly in the shape of a cross, the vertical screw being coupled with a motor turning the screw whilst vertically positioning the receiver container.

7. Assembly as defined in claim 6, wherein the opening component of the removal means is selectively positioned opposite the opening door of a selected storage container.

8. Assembly as defined in claim 7, wherein the removal means comprises a second vertical screw and a second horizontal screw, the two screws being coupled in operation with a second nut assembly in the shape of a cross on which the opening component is mounted, each screw being supplied with a motor turning each screw in order to selectively position the nut assembly in the shape of a cross and an opening component situated next to the opening door of a selected storage container.

9. Assembly as defined in claim 8, wherein the opening component is an electromagnet magnetically opening the door of a selected storage container when the electromagnet is energized.

10. Assembly as defined in claim 9, wherein the opening doors of the storage containers are fixed onto the storage containers on which they swivel, each opening door being supplied with locking means to hold each storage container in a normally closed position.

11. Assembly as defined in claim 10, wherein the first receiver container is supplied with an opening door having locking means to hold the receiver container in a normally closed position.

12. Assembly as defined in claim 11, wherein the locking means of the storage containers and the storage containers themselves, contain permanent magnets.

13 Assembly as defined in claim 12, wherein the control means is a microprocessor electrically coupled with the positioning means and removal means, the microprocessor being supplied with storage means for operational instructions and subroutines, as well as current data for the use of individual keys.

14. Assembly as defined in claim 13, wherein the control means is provided with input means comprising a keyboard for coding information into the microprocessor concerning an individual key.

15. Assembly as defined in claim 14, wherein the control means is supplied with a CR tube to display the current data stored in the microprocessor.

16. Assembly as defined in claim 15, wherein the control means is provided with a printer to print the current data stored in he microprocessor.

17. Assembly as defined in claim 16, wherein the control means is provided with a plurality of switches directly actuating specific operational subroutines.

18. Assembly as defined in claim 17, comprising, in addition, a receiver tray in which a key is placed by one of the storage containers.

19. Assembly as defined in claim 18, wherein the rectangular matrix of the storage containers is housed in a safe enclosure.

20. Assembly as defined in claim 12, wherein the receiver container is supplied with a solenoid coupled to a vertical part of the opening door with a view to opening the opening door.

FIG. 1

FIG. 2

FIG. 3

FIG. 4

# FIG. 5